# DEMANDE DE BREVET EUROPEEN

(11) **EP 1 024 629 A1**
(43) Date de publication de la demande: **02.08.2000**
(21) Numéro de dépôt: 00410007.9
(22) Date de dépôt: 28.01.2000
(51) Int. Cl.: H04L 12/56, H04Q 11/04

(54) **Système de gestion d'émissions numériques concourantes par scrutation cyclique**

(30) Priorité: 29.01.1999 FR 9901192
(71) Demandeur: STMicroelectronics SA, 94250 Gentilly (FR)
(72) Inventeur: Moniot, Pascal, 38190 Bernin (FR); Coppola, Marcello, 38430 Moirans (FR)
(74) Mandataire: de Beaumont, Michel

(57) **Abrégé**

L'invention concerne un système de gestion d'émissions de données sur un canal unique (OUT) à partir de plusieurs sources (10), une requête de priorité normale étant présentée lorsqu'une source est prête à émettre un paquet de données, comprenant un circuit de scrutation cyclique (12) qui examine les requêtes à des instants d'analyse successifs et provoque l'émission d'un paquet par les sources pour lesquelles une requête a été présentée avant l'instant d'analyse courant. Le système comprend, pour chaque source, une file à deux emplacements (14) dans laquelle la source écrit un paquet aussitôt qu'il est prêt, une requête de priorité élevée étant présentée lorsque la file contient deux paquets, le circuit de scrutation étant prévu pour provoquer d'abord l'émission d'un paquet de chaque file associée à une requête de priorité élevée.

## Description

La présente invention concerne un système de gestion de plusieurs processus concourants par la méthode de la scrutation cyclique, également appelée méthode "round-robin". La présente invention concerne plus spécifiquement un tel système de gestion appliqué à plusieurs émissions concourantes de données sur un canal de communication unique.

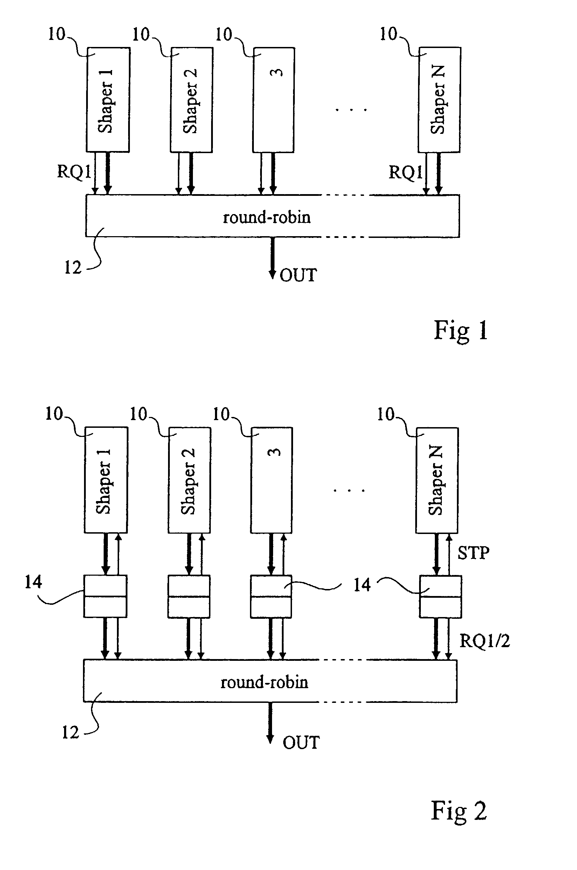

La figure 1 représente schématiquement un tel système de gestion d'émissions de données. Plusieurs sources de données 10 sont reliées à un circuit de scrutation cyclique 12 qui est destiné à transmettre les données fournies par les sources 10 sur un canal unique OUT.

Le système de la figure 1 est utilisé, par exemple, dans un commutateur multiprotocole destiné à connecter des réseaux Ethernet à un réseau ATM. Dans ce cas, les sources de données 10 sont des circuits de mise en forme de flux ou "shapers", dont chacun est destiné à réguler le débit en émission sur le réseau ATM en fonction d'un profil de débit préalablement négocié.

Le circuit de scrutation cyclique 12 est destiné à traiter chacune des sources 10 avec la même priorité et de la manière la plus équitable possible, en tenant compte du fait que ces sources demandent à émettre de manière asynchrone. Pour cela, le système fonctionne généralement de la manière suivante :

Chaque fois qu'une source 10 est prête à émettre un paquet de données sur le canal de sortie OUT, elle émet une requête RQ1 vers le circuit de scrutation cyclique 12. Le circuit 12 examine, à un instant donné, les requêtes présentées par les sources 10 et élit les sources correspondantes pour émettre leurs paquets consécutivement sur le canal OUT. Toute requête survenant après l'instant d'analyse est ignorée jusqu'à l'instant d'analyse suivant qui survient à la fin de l'émission du dernier paquet.

Ainsi, le temps qui sépare deux instants d'analyse est égal à la durée d'émission des paquets par les sources qui ont été élues pour émettre. L'intervalle de temps maximal séparant deux instants d'analyse est égal à la durée de transmission de N paquets (N étant le nombre de sources 10).

Avec la configuration qui vient d'être décrite, le système peut garantir, pour chacune des sources 10, un débit maximal d'un paquet par intervalle d'analyse maximal. Toutefois les sources 10 respectent en général ce débit de manière moyenne. Il en résulte qu'une source peut avoir à émettre deux paquets séparés d'un intervalle inférieur à l'intervalle d'analyse maximal. Ceci ne pose aucun problème si un faible nombre de sources 10 demandent à émettre. En effet, l'intervalle séparant alors deux instants d'analyse est plus petit que l'intervalle maximal et probablement inférieur à la durée séparant les deux requêtes d'émission de la même source.

Par contre, lorsqu'un grand nombre de sources demandent à émettre, les deux requêtes d'émission consécutives d'une même source peuvent se produire à l'intérieur d'un même intervalle d'analyse, d'où il résulte qu'un seul des deux paquets correspondants peut être émis et que l'autre est perdu. Pour éviter la perte de paquets, il est classique d'arrêter chaque source après qu'elle a émis une requête, l'arrêt étant levé dès que le paquet correspondant a été émis.

Une autre solution pour éviter la perte de paquets pourrait être de stocker dans une mémoire tampon les requêtes qui ne peuvent être traitées dans un intervalle d'analyse courant. Toutefois, cette solution ne fait que retarder la nécessité d'arrêter une source sans vraiment supprimer le problème, sauf à utiliser des mémoires tampon de taille déraisonnable.

Dans le cas où les sources 10 sont des circuits de mise en forme de flux, il est désavantageux de devoir les arrêter, car cela perturbe leur fonction de régulation de flux.

Un objet de la présente invention est de prévoir un système de gestion de plusieurs émissions de données concourantes qui évite les problèmes susmentionnés.

Pour atteindre cet objet, la présente invention prévoit un système de gestion d'émissions de données sur un canal unique à partir de plusieurs sources, une requête de priorité normale étant présentée lorsqu'une source est prête à émettre un paquet de données, comprenant un circuit de scrutation cyclique qui examine les requêtes à des instants d'analyse successifs et provoque l'émission d'un paquet par les sources pour lesquelles une requête a été présentée avant l'instant d'analyse courant. Le système comprend, pour chaque source, une file à deux emplacements dans laquelle la source écrit un paquet aussitôt qu'il est prêt, une requête de priorité normale étant présentée lorsque la file contient un seul paquet et une requête de priorité élevée étant présentée lorsque la file contient deux paquets, le circuit de scrutation étant prévu pour provoquer l'émission d'un paquet de chaque file associée à une requête de priorité élevée et ne provoquer l'émission des paquets de files associées à des requêtes de priorité normale que si aucune requête de priorité élevée n'a été présentée avant un instant d'analyse.

Selon un mode de réalisation de la présente invention, le circuit de scrutation est prévu pour modifier de manière aléatoire à chaque instant d'analyse l'ordre dans lequel sont émis les paquets des sources associées aux requêtes.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de manière schématique un système de gestion classique, par scrutation cyclique, de plusieurs émissions de données concourantes ; et
la figure 2 représente schématiquement un mode de réalisation de système de gestion d'émissions concourantes selon la présente invention.

A la figure 2, plusieurs sources de données 10 sont reliées à un circuit de scrutation cyclique 12 par l'intermédiaire de files respectives 14 à deux emplacements.

Lorsqu'une source 10 est prête à émettre un paquet de données, ce paquet est immédiatement écrit dans la file correspondante 14.

Si une file 14 contient une seule donnée, elle émet vers le circuit de scrutation cyclique 12 une requête normale RQ1 qui est traitée de manière classique, comme cela a été décrit en relation avec la figure 1. En fait, le premier emplacement utilisé d'une file 14 correspond à un registre du système classique, utilisé pour conserver un paquet en attente de l'autorisation d'émettre du circuit de scrutation 12.

Lorsque la source est prête à émettre un deuxième paquet alors que le premier paquet inscrit dans la file 14 n'a pas encore été émis, ce deuxième paquet est écrit dans l'emplacement restant de la file 14. La file émet alors vers le circuit 12 une requête de priorité élevée RQ2.

A chaque instant d'analyse, le circuit de scrutation 12 relève les requêtes présentées par les files 14. Si toutes les requêtes sont de priorité normale, ces requêtes sont traitées de manière classique comme cela a été mentionné ci-dessus. Par contre, s'il y a des requêtes de priorité élevée, seules les sources 10 correspondant aux requêtes de priorité élevée sont élues pour émettre leurs paquets consécutivement, ces paquets étant bien entendu pris dans les files 14 associées. Une fois ces paquets émis, les files correspondantes, ne contenant plus qu'un paquet, présentent de nouveau une requête de priorité normale.

Les requêtes normales qui n'ont pas été traitées sont prises en compte à l'instant d'analyse suivant, parmi d'éventuelles nouvelles requêtes et les requêtes redevenues normales. Bien entendu, certaines de ces requêtes pourront entre temps avoir été transformées en requêtes de priorité élevée et seront donc traitées en priorité par rapport aux requêtes normales.

L'efficacité du système est basé sur le fait que les sources émettant à débit élevé sont peu nombreuses et émettent peu longtemps à débit élevé. Ceci constitue la situation la plus courante, qui peut être traitée sans devoir arrêter les sources qui émettent à débit élevé.

Bien entendu, dans un cas exceptionnel où un grand nombre de sources émettent à débit élevé, il est possible que le nombre de requêtes de priorité élevée soit momentanément si élevé que certaines sources présentent un nouveau paquet de données avant même qu'un emplacement pour recevoir ce nouveau paquet ait été libéré dans la file correspondante 14. Dans ce cas, la source doit être arrêtée. La file 14 réalise cette fonction par l'émission d'un signal d'arrêt STP vers la source lorsqu'elle contient deux paquets.

Dans le cas où le système est utilisé dans un commutateur multiprotocole, il est possible que plusieurs sources 10, qui sont alors des circuits de mise en forme de flux, soient associées à une même connexion physique en émission. Une telle connexion physique peut avoir des moments d'indisponibilité et nécessiter l'arrêt des sources 10 correspondantes. Une indisponibilité d'une connexion est indiquée au circuit de scrutation 12 qui est prévu pour ne pas traiter les sources associés à la connexion indisponible, même si elles présentent une requête de priorité élevée par l'intermédiaire de leurs files 14. Il en résulte l'arrêt des sources si leurs files 14 sont pleines.

Une indisponibilité de connexion peut survenir pendant un intervalle d'analyse juste après l'émission d'un premier paquet sur cette connexion, et la connexion peut redevenir disponible avant la fin de l'intervalle d'analyse courant. A l'intervalle d'analyse suivant, la connexion peut de nouveau devenir indisponible après l'émission d'un premier paquet, et ainsi de suite pendant plusieurs intervalles d'analyse consécutifs.

Comme on l'a précédemment indiqué, le circuit de scrutation cyclique 12 traite classiquement les sources 10 consécutivement, c'est-à-dire par ordre de rangs croissants. Si on procède ainsi, la ou les dernières sources associées à une connexion qui devient indisponible, dans le cas évoqué ci-dessus, ne seront traitées que lorsque la connexion devient de nouveau disponible de manière continue.

Pour éviter cette iniquité de traitement, selon un mode de réalisation de l'invention, le circuit de scrutation cyclique 12 est modifié pour que l'ordre de traitement des sources élues pour émettre soit aléatoire.

De nombreuses variantes et modification de la présente invention apparaîtront à l'homme du métier. Par exemple, bien que l'on ait décrit des files 14 à deux emplacements de deux niveaux de priorité, on peut prévoir des files à plus de deux emplacements de niveaux de priorité respectifs croissants.

## Revendications

1. Système de gestion d'émissions de données sur un canal unique (OUT) à partir de plusieurs sources (10), une requête de priorité normale étant présentée lorsqu'une source est prête à émettre un paquet de données, comprenant un circuit de scrutation cyclique (12) qui examine les requêtes à des instants d'analyse successifs et provoque l'émission d'un paquet par les sources pour lesquelles une requête a été présentée avant l'instant d'analyse courant,
caractérisé en ce qu'il comprend, pour chaque source, une file à deux emplacements (14) dans laquelle la source écrit un paquet aussitôt qu'il est prêt, une requête de priorité normale étant présentée lorsque la file contient un seul paquet et une requête de priorité élevée étant présentée lorsque la file contient deux paquets, le circuit de scrutation étant prévu pour provoquer l'émission d'un paquet de chaque file associée à une requête de priorité élevée et ne provoquer l'émission des paquets de files associées à des requêtes de priorité normale que si aucune requête de priorité élevée n'a été présentée avant un instant d'analyse.

2. Système de gestion d'émissions de données selon la revendication 1, caractérisé en ce que le circuit de scrutation est prévu pour modifier de manière aléatoire à chaque instant d'analyse l'ordre dans lequel sont émis les paquets des sources associées aux requêtes.
